## Europäisches Patentamt

## European Patent Office

## Office européen des brevets

(11) Numéro de publication: **0 319 408 B1**

(12) **FASCICULE DE BREVET EUROPEEN**

(45) Date de publication de fascicule du brevet: **23.12.92** (51) Int. Cl.5: **B65D 47/04**, B29C 45/44

(21) Numéro de dépôt: **88403020.6**

(22) Date de dépôt: **30.11.88**

(54) **Dispositif de fermeture pour récipient formant capsule, moule pour sa fabrication et son procédé de fabrication.**

(30) Priorité: **04.12.87 FR 8716883**

(43) Date de publication de la demande:
**07.06.89 Bulletin 89/23**

(45) Mention de la délivrance du brevet:
**23.12.92 Bulletin 92/52**

(84) Etats contractants désignés:
**AT BE CH DE ES GB GR IT LI LU NL SE**

(56) Documents cités:
**EP-A- 0 201 655**
**GB-A- 1 360 091**
**US-A- 3 675 812**

(73) Titulaire: **LE MOULAGE AUTOMATIOUE
(Société anonyme)
Avenue de l'Europe Zone Industrielle
F-02400 Château-Thierry(FR)**

(72) Inventeur: **Corteggiani, Pierre
65, Rue des Fenouillères
F-38170 Seyssins(FR)**

(74) Mandataire: **Lerner, François et al
5, rue Jules Lefèbvre
F-75009 Paris(FR)**

Rank Xerox (UK) Business Services

## Description

L'invention concerne un moule pour le moulage en une seule pièce d'une capsule avec un couvercle selon la revendication 1 et un procédé de moulage utilisant un tel moule. On connait des dispositifs de fermeture pour récipient se terminant par un goulot du type comprenant une capsule avec un couvercle qui s'articule sur elle, permettant dans une position d'ouverture de dégager un orifice au moins de versement formé sur le dessus de la capsule, et dans une position de fermeture rabattue sur la capsule d'obturer ledit orifice.

On connaît de plus en plus des récipients comprenant un tel dispositif et qui ont l'avantage de faciliter les opérations d'ouverture et de fermeture sans crainte d'égarer le bouchon et facilitant également l'utilisation du produit contenu dans le récipient. Ce genre de fermeture se généralise notamment pour les produits d'entretien ménagers ainsi que pour les cosmétiques, shampooings et autres.

L'inconvénient de ce type de fermeture est son prix de fabrication relativement élevé, du fait plus particulièrement de la prévision d'une articulation sur la capsule.

Selon l'art antérieur on connaît notamment des dispositifs dans lesquels la capsule et le couvercle sont formés par deux pièces séparées qui sont ensuite assemblées l'une sur l'autre. Il est évident qu'une telle conception implique un nombre d'opérations plus important que si l'ensemble de la capsule et du couvercle est moulé d'une seule pièce.

Selon d'autres dispositifs connus, tels par exemple que décrits au document GB-A- 1 360 091, la capsule et le couvercle sont moulés d'une seule pièce, l'articulation étant reportée sur le côté de la capsule. Ceci implique un encombrement plus grand du dispositif lorsque la capsule est ouverte, ce qui peut également être inesthétique et surtout ceci implique généralement que la capsule et le couvercle sont moulés à plat en position d'ouverture du couvercle entraînant un encombrement plus grand de la surface du moule, divisant sensiblement par deux le nombre des pièces pouvant être moulées sur une même presse.

L'invention a pour objet d'éviter les inconvénients susmentionnés.

A cet effet, l'invention prévoit un moule pour le moulage d'une capsule avec un couvercle qui s'articule sur elle, permettant dans une position d'ouverture de dégager un orifice au moins formé sur le dessus de la capsule, et dans une position de fermeture, rabattue sur la capsule, d'obturer ledit orifice, la capsule comprenant une charnière double ou équivalente, l'espace séparant les deux axes de la charnière double ou la largeur de la charnière équivalente étant de l'ordre de quelques millimètres, ladite charnière étant positionnée à une certaine distance de la périphérie de la capsule, ledit moule étant caractérisé en ce qu'il comprend essentiellement trois parties, à savoir :
- la première formant piston entrant sensiblement dans le corps de la capsule,
- la deuxième formant chapeau recouvrant la capsule et son couvercle alors en position ouverte rabattue sensiblement parallèlement à la surface supérieure de la capsule,
- la troisième formant cylindre ou matrice entourant extérieurement le corps de la capsule et comportant un appendice en forme de lame venant par dessus la surface supérieure de la capsule et par dessous ledit couvercle rabattu, lesdites trois parties du moule étant déplaçables pour le démoulage des capsules formées dans un simple mouvement relatif de déplacement axial d'ouverture desdites parties constituant le moule.

L'invention concerne également un procédé de moulage d'une capsule du type précité utilisant un moule du type ci-dessus décrit, selon lequel, pour assurer l'éjection de la pièce moulée, capsule plus couvercle,
- on écarte d'abord le chapeau du moule du reste du moule,
- on extrait ensuite la capsule en écartant par en-dessous le piston, le couvercle étant simultanément relevé par la lame de la matrice,
- et l'on éjecte ensuite la pièce moulée.

L'invention et sa mise en oeuvre apparaîtront plus clairement à l'aide de la description qui va suivre faite en référence aux dessins annexés illustrant à titre d'exemple des modes de réalisation. Dans ces dessins:
- la figure 1 montre une vue en coupe transversale passant par le plan médian d'une capsule pourvue d'un couvercle à charnière double conforme à l'invention,
- la figure 2 montre une vue de dessus faite selon la flèche II de la figure 1,
- la figure 3 montre à plus grande échelle le détail de l'articulation du couvercle sur le corps de capsule, détail entouré III à la figure 1,
- les figures 4, 5 et 6 montrent schématiquement trois positions successives du couvercle s'articulant sur le corps de capsule allant de la pleine ouverture (figure 4) en position rabattue parallèlement au-dessus de la capsule, à la position de pleine ouverture mais couvercle relevé à 90° par rapport à la surface supérieure de la capsule (figure 5) et à la position juste avant fermeture (figure 6),
- les figures 7, 8 et 9 montrent trois phases successives du processus de moulage dans un moule conforme à l'invention, - la figure 10 montre une variante de réalisation de la charnière.

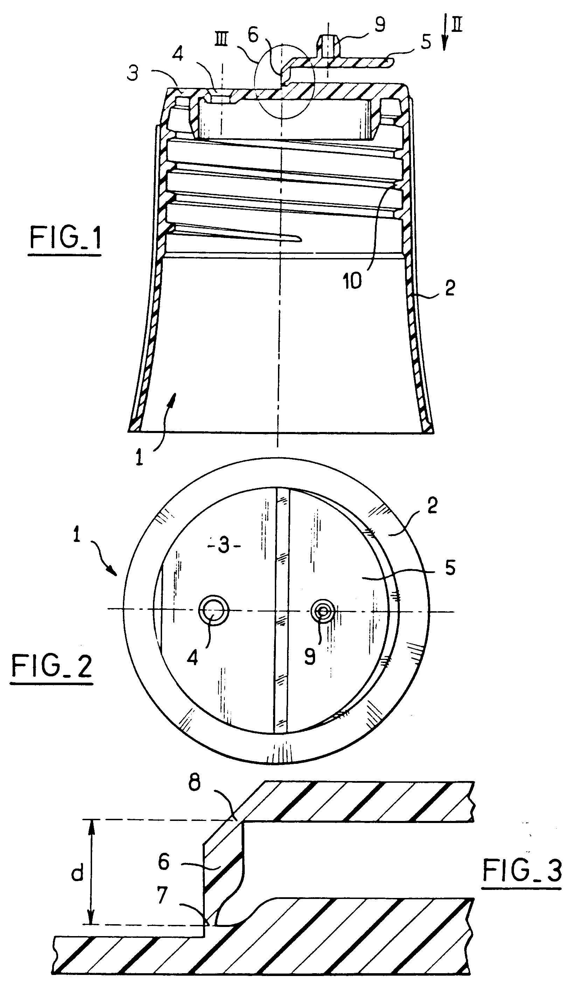

En se référant aux dessins et en se reportant tout d'abord aux figures 1 à 3, on a illustré une capsule repérée dans son ensemble 1 comportant essentiellement un corps de capsule 2 qui viendra se fixer sur le goulot d'un récipient (non représenté) et une surface supérieure 3 ou "dessus" de capsule avec un orifice 4 de versement du produit contenu dans le récipient. La capsule comporte un couvercle 5 qui est articulé sur elle au moyen d'une charnière 6 dans l'exemple illustré du type charnière double à deux axes d'articulation 7, 8 (figure 3). Le couvercle 5 comporte un obturateur 9 venant en position rabattue obturer l'orifice 4.

Dans l'exemple illustré à la figure 1, on a supposé que la capsule était du type vissable sur le goulot du récipient grâce à un pas de vis référencé 10.

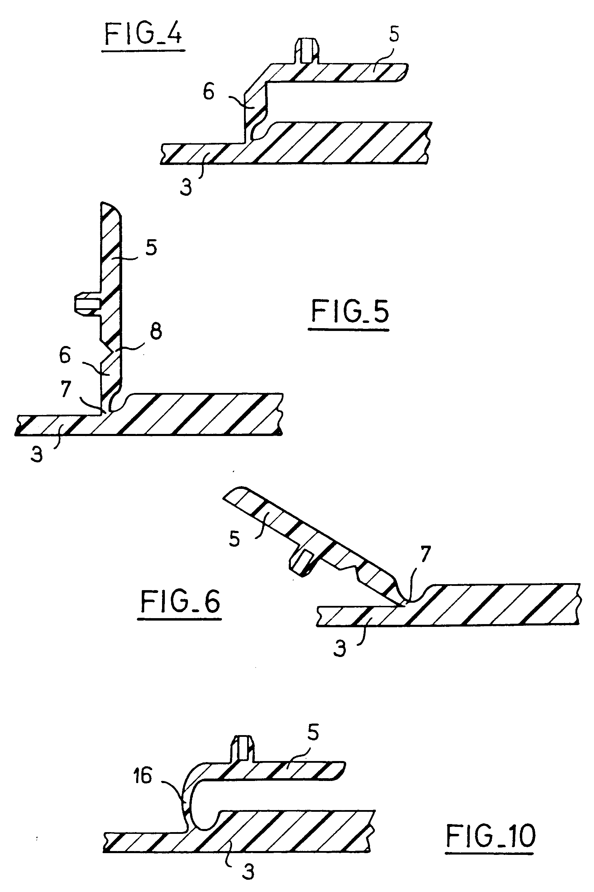

En se référant aux figures 4, 5 et 6, on a montré schématiquement trois positions intermédiaires d'ouverture du couvercle 5.

Dans la figure 4, le couvercle 5 occupe la même position que celle illustrée à la figure 1, le couvercle étant en position de pleine ouverture rabattue sensiblement parallèlement par dessus la surface supérieure 3 de la capsule.

Dans la figure 5, le couvercle 5 a été relevé en position sensiblement perpendiculaire à la surface du dessus 3 de la capsule, le couvercle 5 ayant en fait tourné de 90° autour de l'axe 8 de la charnière 6.

Dans la position illustrée à la figure 6, juste avant la fermeture du couvercle 5, le couvercle a pivoté autour de l'axe 7 de la charnière.

Si l'on souhaite que normalement un tel processus "en deux temps" se forme, il suffit de constituer la charnière 8 de façon plus faible que la charnière 7, ceci apparaissant du reste dans l'exécution montrée à plus grande échelle à la figure 3.

Mais on peut tout aussi bien prévoir une construction inverse dans laquelle la charnière 8 sera plus forte que ta charnière 7 et qui sera généralement préférée dans la pratique.

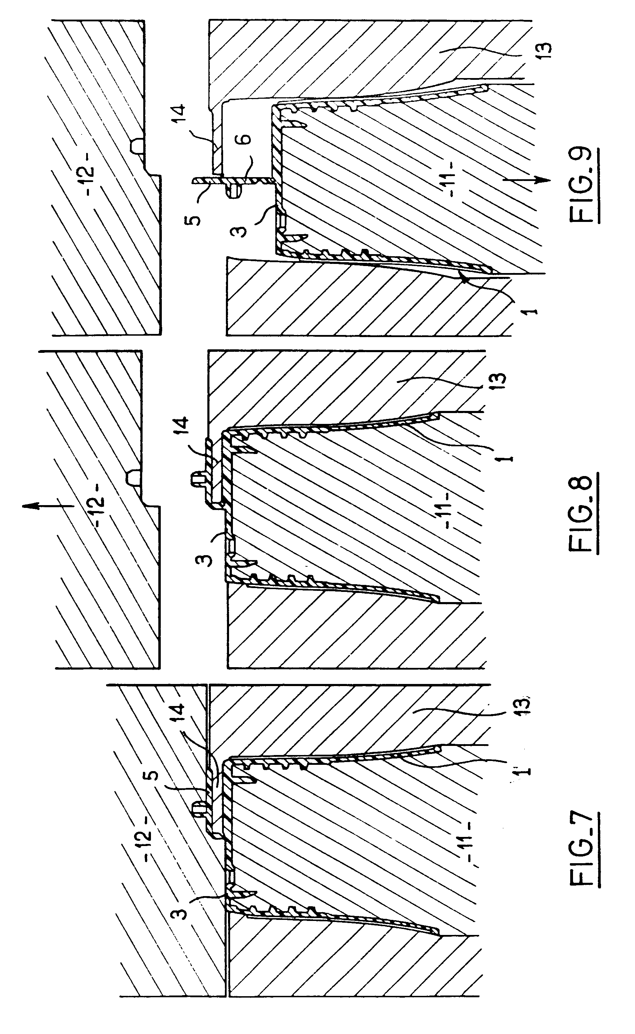

En faisant référence aux figures 7, 8 et 9, on va expliquer maintenant l'avantage et t'intérêt d'une telle capsule conçue seton l'invention.

En se reportant à la figure 7, on aperçoit la capsule 1 avec son couvercle 5 moulés à l'intérieur d'un moule constitué essentiellement en trois parties, à savoir :

- une première partie formant piston 11 entrant sensiblement à l'intérieur du corps de la capsule 1,
- une seconde partie 12 formant chapeau ou couvercle de fermeture du moule recouvrant la capsule 1 et son couvercle 5, en opposition au piston 11,
- et une troisième partie formant cylindre ou matrice 13 entourant extérieurement le corps de la capsule 1 et comportant un appendice en forme de lame 14 venant par dessus la surface supérieure 3 de la capsule et par dessous le couvercle 5 qui est moulé dans la position rabattue ouverte équivalente à celle illustrée à la figure 4 précédente.

Le moule étant ainsi fermé, le corps de la capsule 1 et son couvercle 5 sont moulés en une seule opération.

Après moulage, le démoulage s'effectue comme décrit ci-après.

En se référant à la figure 8, le moule est ouvert en écartant d'abord le chapeau 12 du reste du moule.

Ensuite de quoi, comme illustré à la figure 9, il suffit d'extraire le corps de capsule 1 en tirant le piston 11 par le bas par rapport au cylindre 13 supposé fixe. Dans cette opération, le couvercle 5, solidaire du corps 1 de la capsule est obligé de s'ouvrir en tournant par dessus la lame 14, ce qui permet l'extraction de la capsule moulée avec son couvercle. En fin de mouvement, lorsque le piston 11 a quitté le cylindre 13, on procède à l'éjection de façon classique. Dans l'exemple illustré d'une capsule vissée, ceci peut se faire par exemple par dévissage de la capsule sur le piston 11.

On notera, que du fait de la prévision d'une charnière double 6, il est possible de donner à la lame 14 l'épaisseur souhaitable, par exemple de quelques millimètres et de préférence comprise entre 2 et 4 mm pour des raisons de résistance et de facilité d'exécution du moule. L'épaisseur de la lame 14 sera seulement déterminée par la distance d (figure 3) séparant les deux axes 7 et 8 de charnière.

Il est bien évident cependant que le principe de l'invention n'est pas limité à une charnière double. On peut utiliser en place de ta charnière double toute charnière équivalente formant languette, comme illustré par exemple à la figure 10. Dans une telle réalisation, la languette 16 jouera le rôle équivalent de la charnière double 6, la largeur de la languette 16 étant choisie sensiblement égale à la distance d ci-dessus référencée en relation avec la figure 3.

Il y a lieu également de noter que l'invention n'est pas limitée à une capsule de type vissable, tout autre genre de capsule, par exemple "clipsable", ajustable à force ou autre, pouvant également être fabriquée. On notera que dans le cas d'une capsule vissable, la capsule à couvercle incorporé de l'invention pourra former distributeur-doseur si on dévisse la capsule et qu'on l'utilise couvercle fermé.

De la même façon, toute forme appropriée souhaitable peut être donnée à l'orifice 4 et au pion 9 coopérant de fermeture, l'orifice 4 pouvant être remplacé par un orifice verseur, un orifice à buse de projection directionnelle, etc...

Dans les exemples illustrés il apparaît que l'articulation du couvercle peut être avantageusement ménagée au voisinage de la partie médiane de la capsule, ce qui est en général préféré, mais il apparaît également que selon l'invention cette articulation peut être reportée plus ou moins vers la périphérie de la capsule, sans modification du processus général décrit.

**Revendications**

1. Moule pour le moulage en une seule pièce d'une capsule (1) avec un couvercle (5) qui s'articule sur elle, permettant dans une position d'ouverture de dégager un orifice (4) au moins formé sur le dessus (3) de la capsule, et dans une position de fermeture, rabattue sur la capsule, d'obturer ledit orifice, la capsule (1) comprenant une charnière double (6) ou équivalente (16), l'espace séparant les deux axes (7, 8) de la charnière double ou la largeur de la charnière équivalente (16) étant de l'ordre de quelques millimètres, ladite charnière étant positionnée à une certaine distance de la périphérie de la capsule, ledit moule comprenant essentiellement trois parties, à savoir :
   - la première formant piston (11) entrant sensiblement dans le corps de la capsule (1),
   - la deuxième formant chapeau (12) recouvrant la capsule (1) et son couvercle (5) alors en position ouverte rabattue sensiblement parallèlement à la surface supérieure (3) de la capsule,
   - la troisième formant cylindre ou matrice (13) entourant extérieurement le corps (2) de la capsule (1) et comportant un appendice en forme de lame (14) venant par dessus la surface supérieure (3) de la capsule et par dessous ledit couvercle (5) rabattu, lesdites trois parties du moule étant déplaçables pour le démoulage des capsules formées dans un simple mouvement relatif de déplacement axial d'ouverture desdites parties (11, 12, 13) constituant le moule.

2. Procédé de moulage en une seule pièce d'une capsule avec couvercle rabattable à charnière double ou équivalente, utilisant un moule selon la revendication 1, selon lequel, pour assurer l'éjection de la pièce moulée, capsule (1) plus couvercle (5),

   - on écarte d'abord le chapeau (12) du moule du reste du moule,
   - on extrait ensuite la capsule (1) en écartant par en dessous le piston (11), le couvercle (5) étant simultanément relevé par la lame (14) de la matrice (13),
   - et l'on éjecte ensuite la pièce moulée.

**Claims**

1. Mould for moulding in a single piece a cap (1) with a lid (5) articulated thereabout, enabling at least one aperture (4) formed on the top (3) of the cap to be released in an opening position, and enabling the said aperture to be sealed off in a closing position turned down onto the cap, the cap (1) comprising a double hinge (6) or the equivalent thereof (16), the space separating the two axes (7, 8) of the double hinge or the width of the equivalent hinge (16) being approximately a few millimetres, the said hinge being positioned at a specific distance from the periphery of the cap, and the said mould comprising substantially three parts, ie:
   - the first part forming a piston (11) which enters appreciably into the body of the cap (1);
   - the second part forming a cover (12) covering the cap (1) and the lid (5) thereof, which is then in the open position turned down substantially parallel to the upper surface (3) of the cap;
   - the third part forming a cylinder or die (13) surrounding the outside of the body (2) of the cap (1) and including a protuberance in the form of a strip (14) passing above the upper surface (3) of the cap and below the said turned down lid (5), these three parts of the mould being displaceable for removing from the mould the caps formed in a single relative axial displacement movement of opening the said parts (11, 12, 13) constituting the mould.

2. Method for moulding in a single piece a cap with a lid which can be turned down by means of a double hinge or the equivalent thereof, using a mould according to claim 1, in which, in order to ensure that ejection of the moulded part, ie the cap (1) and lid (5) takes place:
   - the mould cover (12) is first of all removed from the rest of the mould;
   - the cap (1) is then extracted by moving away the piston (11) from below, the lid (5) being simultaneously raised by the strip (14) on the die (13); and
   - the moulded part is then ejected.

**Patentansprüche**

1. Form zum einstückigen Formen einer (Verschluß-) Kapsel (1) mit einem daran angelenkten Verschlußdeckel (5), der in einer Öffnungsstellung mindestens eine an dem Oberteil (3) der Kapsel gebildete Öffnung (4) freigibt und in einer Verschlußstellung, auf die Kapsel herunterklappt, diese Öffnung verschließt, wobei die Kapsel (1) ein Doppel (6)- oder Äquivalent (16)- Scharnier umfaßt, der die zwei Achsen (7,8) des Doppelscharniers trennende Zwischenraum oder die Breite des Äquivalentscharniers (16) in der Größenordnung einiger Millimeter liegen und das Scharnier in einem bestimmten Abstand zum Umfang der Kapsel angeordnet ist, wobei die Form im wesentlichen drei Teile umfaßt, nämlich:

   - den ersten, der einen wesentlich in den Körper der Kapsel (1) eintretenden Kolben (11) bildet,
   - den zweiten, der eine die Kapsel (1) und ihren Verschlußdeckel (5) überdeckende Abdeckung (12) bildet, wobei der Verschlußdeckel dann in Öffnungsstellung im wesentlichen parallel zur Oberfläche (3) der Kapsel umgeklappt ist,
   - den dritten, der einen Zylinder oder Ring (Matrix) (13) bildet, der von außen den Körper (2) der Kapsel (1) umgibt und einen Ansatz in Form einer Zunge (14) bildet, die von oben gegen das Oberteil (3) der Kapsel und von unten gegen den umgeklappten Verschlußdeckel (5) gerichtet ist, wobei die drei Teile der Form zum Entformen der geformten Kapseln in einer einfachen Relativbewegung einer axialen Öffnungsverlagerung der die Form bildenden Teile (11, 12, 13) verlagerbar sind.

2. Verfahren zum einstückigen Formen einer Kapsel mit einem mittels Doppel- oder Äquivalentscharnier klappbaren Verschlußdeckel, unter Verwendung einer Form nach Anspruch 1, gemäß dem zur Gewährleistung des Auswerfens des geformten Stückes, umfassend Kapsel (1) und Verschlußdeckel (5),

   - zunächst die Abdeckung (12) der Form vom Rest der Form entfernt wird,
   - darauf die Kapsel (1) herausgenommen wird, indem der Kolben (11) nach unten entfernt wird, wobei der Verschlußdeckel (5) gleichzeitig durch die Zunge (14) des Ringes (13) angehoben wird,
   - und endlich das geformte Stück ausgeworfen wird.

FIG_1

FIG_2

FIG_3

FIG_4

FIG_5

FIG_6

FIG_10

FIG.7　　　FIG.8　　　FIG.9

EP 0 319 408 B1